# FASCICULE DE BREVET EUROPEEN

(11) **EP 3 964 280 B1**
(45) Date de publication et mention de la délivrance du brevet: **29.11.2023**
(21) Numéro de dépôt: 21191858.6
(22) Date de dépôt: 18.08.2021
(51) Int. Cl.: B01D 53/34, B01D 53/22, B01D 53/30, C10L 3/10

(54) **DISPOSITIF DE RÉGULATION D'UNE INSTALLATION POUR LE TRAITEMENT PAR PERMÉATION MEMBRANAIRE DE BIOGAZ**
EINSTELLVORRICHTUNG EINER ANLAGE ZUR AUFBEREITUNG VON BIOGAS DURCH MEMBRANPERMEATION
DEVICE FOR CONTROLLING A FACILITY FOR TREATMENT OF BIOGAS BY MEMBRANE PERMEATION

(30) Priorité: 08.09.2020 FR 2009095
(43) Date de publication de la demande: 09.03.2022
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: Cerceau, Arnaud, 38360 Sassenage (FR)
(74) Mandataire: Air Liquide

(56) Documents cités:
- FR-A1- 3 084 840
- FR-A1- 3 084 842
- FR-A1- 3 089 819
- FR-A1- 3 089 820

## Description

La présente invention est relative à un dispositif de régulation d'une installation I pour le traitement par perméation membranaire d'un flux gazeux d'alimentation comprenant au moins du méthane et du dioxyde de carbone et à un procédé de régulation mettant en oeuvre une telle installation.

Elle concerne en particulier l'épuration de biogaz, dans le but de produire du biométhane conforme aux spécifications pour injection dans un réseau de gaz naturel.

Le biogaz est le gaz produit lors de la dégradation de matières organiques en l'absence d'oxygène (digestion anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces. _

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL)...

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un débit de méthane purifié.

Une première étape consiste à sécher et débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Le biogaz est ensuite comprimé à une pression supérieure à 8bars. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée ; elle est donc utilisée pour séparer le CO2 présent dans le biogaz, et en particulier dans le gaz de décharge. Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CH4, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes. FR3089819 A1 concerne la mesure de la concentration en méthane dans le second rétentat et l'ajustement de sa pression d'aspiration avant le recyclage du second perméat dans le flux de gaz d'alimentation afin de réguler la concentration en CH4 du second perméat proche d'une valeur de consigne.

Il est préférable que le réseau de gaz naturel reçoive un débit de méthane présentant une concentration en méthane correspondant à une consigne choisie.

Partant de là, un problème qui se pose est de fournir un dispositif permettant l'obtention d'un débit de méthane à une concentration correspondant à une consigne choisie.

Une solution de la présente invention est un dispositif de régulation d'une installation I pour le traitement par perméation membranaire d'un flux gazeux d'alimentation comprenant au moins du méthane et du dioxyde de carbone, ledit dispositif comprenant :
- Au moins un moyen A de mesure du pouvoir calorifique supérieur (PCS) du flux gazeux d'alimentation,
- Au moins un moyen B de comparaison du pouvoir calorifique supérieur avec une valeur consigne E,
- Au moins un moyen C d'élaboration d'un signal de commande en fonction de la comparaison du pouvoir calorifique supérieur avec la valeur cible, et
- Au moins un moyen D de transmission de ce signal de commande à un moyen de régulation de ladite l'installation I.

La valeur consigne E correspond à une valeur supérieure ou également au PCS (Pouvoir calirifque Supérieur) minimum demandé par le gestionnaire de réseau dans lequel le gaz produit est injecté.

Notons que le signal de commande traduit une nouvelle consigne de concentration en CO2 ou en CH4 dans le flux de biométhane en sortie. Cette nouvelle consigne de concentration se traduira par un moyen de régulation tel que la pression d'au moins un des flux mis en oeuvre dans l'installation de perméation membranaire et/ou le nombre de membranes mises en oeuvre dans l'installation de perméation membranaire.

De préférence, le moyen B et le moyen C sont combinés dans un processeur.

Selon une deuxième alternative, l'invention a pour objet un dispositif de régulation d'une installation I pour le traitement par perméation membranaire d'un flux gazeux d'alimentation comprenant au moins du méthane et du dioxyde de carbone, ledit dispositif comprenant :
- Au moins un moyen A de mesure du pouvoir calorifique supérieur (PCS) du flux gazeux d'alimentation,
- Au moins un moyen B de comparaison du pouvoir calorifique supérieur avec une première valeur consigne E,
- Au moins un moyen C d'élaboration d'un premier signal de commande de la concentration en méthane ou en dioxyde de carbone en sortie de l'installation I en fonction de la comparaison du pouvoir calorifique supérieur avec la première valeur consigne E,
- Au moins un moyen D de transmission du premier signal de commande à une consigne de concentration en méthane ou en dioxyde de carbone en sortie de l'installation sous la forme d'une deuxième valeur consigne E',
- Au moins un moyen A' de mesure de la concentration en méthane ou en dioxyde de carbone en sortie de l'installation I,
- Au moins un moyen B' de comparaison de la concentration en méthane ou en dioxyde de carbone en sortie de l'installation I avec la deuxième valeur consigne E',
- Au moins un moyen C' d'élaboration d'un deuxième signal de commande en fonction de la comparaison de la concentration en méthane ou en dioxyde de carbone en sortie de l'installation I avec la deuxième valeur consigne E',
- Au moins un moyen D' de transmission de ce deuxième signal de commande à un moyen de régulation de ladite installation I.

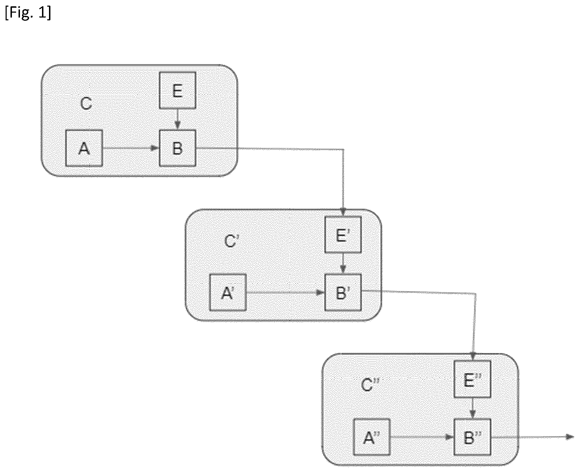

Notons que le moyen D' de transmission peut de manière alternative transmettre ce deuxième signal de commande à une consigne de concentration en méthane ou en dioxyde de carbone en sortie de l'installation sous la forme d'une troisième valeur consigne E" comme cela est schématisé sur la figure 1 [Fig. 1]. Dans ce cas, on trouvera alors dans le dispositif selon l'invention :
- Au moins un moyen A" de mesure de la concentration en méthane ou en dioxyde de carbone en sortie de l'installation I,
- Au moins un moyen B" de comparaison de la concentration en méthane ou en dioxyde de carbone en sortie de l'installation I avec la troisième valeur consigne E',
- Au moins un moyen C" d'élaboration d'un troisième signal de commande en fonction de la comparaison de la concentration en méthane ou en dioxyde de carbone en sortie de l'installation I avec la troisième valeur consigne E',
- Au moins un moyen D" de transmission de ce troisième signal de commande à un moyen de régulation de ladite installation I.

De préférence, le moyen B et le moyen C sont combinés dans un premier processeur et/ou le moyen B' et le moyen C' sont combinés dans un second processeur et/ou le moyen B" et le moyen C" sont combinés dans un troisième processeur. Selon le cas le dispositif selon l'invention peut présenter une ou plusieurs des caractéristiques suivantes :
- le moyen de régulation comprend un système de vannes permettant d'ajouter ou d'enlever au moins une membrane dans l'installation,
- le moyen de régulation comprend au moins un ensemble compresseur-vanne de contre-pression permettant d'augmenter ou de diminuer la pression d'au moins un des flux mis en oeuvre dans l'installation.
- l'installation comprend au moins deux unités de séparation par membrane.

La présente invention a également pour objet un procédé de régulation d'une installation I pour le traitement par perméation membranaire d'un flux gazeux d'alimentation comprenant au moins du méthane et du dioxyde de carbone ledit procédé mettant en oeuvre un dispositif tel que défini précédemment, et comprenant :
a) Une étape de mesure du pouvoir calorifique supérieur (PCS) du flux gazeux d'alimentation,
b) Une étape de comparaison du pouvoir calorifique supérieur avec une valeur consigne E,
c) Une étape d'élaboration d'un signal de commande en fonction de la comparaison effectuée à l'étape b)
d) Une étape de transmission de ce signal de commande à un moyen de régulation de ladite l'installation I, et
e) Une étape de régulation de l'installation I en fonction du signal de commande transmis à l'étape d).

Selon une deuxième alternative, la présente invention a pour objet un procédé de régulation d'une installation I pour le traitement par perméation membranaire d'un flux gazeux d'alimentation comprenant au moins du méthane et du dioxyde de carbone ledit procédé mettant en oeuvre un dispositif tel que défini précédemment, et comprenant :
a) Une étape de mesure du pouvoir calorifique supérieur (PCS) du flux gazeux d'alimentation,
b) Une étape de comparaison du pouvoir calorifique supérieur avec une valeur consigne E,
c) Une étape d'élaboration d'un premier signal de commande de la concentration en méthane ou en dioxyde de carbone en sortie de l'installation I en fonction de la comparaison effectuée à l'étape b),
d) Une étape de transmission du premier signal de commande à une consigne de concentration en méthane ou en dioxyde de carbone en sortie de l'installation sous la forme d'une deuxième valeur consigne E',
e) Une étape de mesure de la concentration en méthane ou en dioxyde de carbone en sortie de l'installation I,
f) Une étape de comparaison de la concentration en méthane ou en dioxyde de carbone en sortie de l'installation I avec la deuxième valeur consigne E',
g) Une étape d'élaboration d'un deuxième signal de commande en fonction de la comparaison de la concentration en méthane ou en dioxyde de carbone en sortie de l'installation I avec la deuxième valeur consigne E',
h) Une étape de transmission de ce deuxième signal de commande à un moyen de régulation de ladite installation I et
i) Une étape de régulation de l'installation I en fonction du signal de commande transmis à l'étape h).

Enfin, le procédé selon l'invention peut présenter une ou plusieurs des caractéristiques ci-dessous :
- l'étape de régulation comprend une étape d'ajustement du nombre de membrane dans l'installation.
- l'étape de régulation comprend une étape d'augmentation ou de diminution de la pression d'au moins un des flux mis en oeuvre dans l'installation.
- le flux gazeux d'alimentation est du biogaz.

L'installation pourra comprendre une première unité de séparation membranaire apte à recevoir le flux gazeux d'alimentation et à fournir un premier perméat et un premier rétentat et une seconde unité de séparation membranaire apte à recevoir le premier rétentat et à fournir un second perméat et un second rétentat. Dans ce cas la régulation pourra par exemple s'effectuer par une augmentation ou une diminution de la pression du flux gazeux d'alimentation et/ou du second perméat. De manière préférentielle, l'installation comprend également une troisième unité de séparation membranaire apte à recevoir le premier perméat et à produire un troisième rétentat et un troisième perméat. L'installation pourra éventuellement comprendre une quatrième unité de séparation membranaire apte à recevoir le troisième rétentat et à produire un quatrième rétentat et un quatrième perméat. Notons que les rétentats seront enrichis en méthane et les perméats enrichis en dioxyde de carbone. Aussi dans le cadre de l'invention par « flux gazeux mis en oeuvre dans l'installation », on entend le flux gazeux d'alimentation mais aussi les différents perméats et rétentats.

Le système de vannes permettant d'ajouter ou d'enlever au moins une membrane dans l'installation permet d'ajouter ou d'enlever au moins une membrane dans au moins une des unités de séparation membranaire de l'installation.

Les vannes permettant d'ajouter et d'enlever les membranes d'une unité de séparation membranaire sont de préférence des vannes papillons ou des vannes à boule.

La solution selon l'invention permet l'obtention d'un flux de méthane à la concentration choisie (second rétentat).

En effet, choisir un taux de CO2 particulier ne garantit pas un taux de CH4 précis car d'autres composants peuvent être présents dans le biométhane comme l'azote (N2) ou l'oxygène (O2). Ces autres composants vont dégrader le pouvoir calorifique du biométhane.

Le dispositif de selon l'invention permet de corriger ces erreurs. En effet, le pouvoir calorifique supérieur prend en compte tous les constituants du flux gazeux d'alimentation. Aussi en se basant sur celui-ci la solution selon l'invention offre une régulation plus précise de l'installation membranaire. Plus le pouvoir calorifique supérieur du flux gazeux d'alimentation sera éloigné du pouvoir calorifique supérieur du biométhane plus la filtration au niveau de l'installation de perméation membranaire sera forte. Et inversement plus le pouvoir calorifique supérieur du flux gazeux d'alimentation sera proche du pouvoir calorifique supérieur du biométhane moins la filtration au niveau de l'installation de perméation membranaire sera forte.

## Revendications

1. Dispositif de régulation d'une installation I pour le traitement par perméation membranaire d'un flux gazeux d'alimentation comprenant au moins du méthane et du dioxyde de carbone, ledit dispositif comprenant :
- Au moins un moyen A de mesure du pouvoir calorifique supérieur (PCS) du flux gazeux d'alimentation,
- Au moins un moyen B de comparaison du pouvoir calorifique supérieur avec une valeur consigne E,
- Au moins un moyen C d'élaboration d'un signal de commande en fonction de la comparaison du pouvoir calorifique supérieur avec la valeur consigne E, et
- Au moins un moyen D de transmission de ce signal de commande Avec le moyen D apte à transmettre le signal de commande à un moyen de régulation de ladite l'installation I ou à une consigne de concentration en méthane ou en dioxyde de carbone en sortie de l'installation sous la forme d'une deuxième valeur consigne E'.

2. Dispositif selon la revendication 1, **caractérisé en ce que** le moyen B et le moyen C sont combinés dans un processeur.

3. Dispositif selon l'une des revendications 1 ou 2, **caractérisé en ce que** le moyen D de transmission de ce signal de commande est apte à transmettre le signal de commande à une consigne de concentration en méthane ou en dioxyde de carbone en sortie de l'installation sous la forme d'une deuxième valeur consigne E' et ledit dispositif comprend :
- Au moins un moyen A' de mesure de la concentration en méthane ou en dioxyde de carbone en sortie de l'installation I,
- Au moins un moyen B' de comparaison de la concentration en méthane ou en dioxyde de carbone en sortie de l'installation I avec la deuxième valeur consigne E',
- Au moins un moyen C' d'élaboration d'un deuxième signal de commande en fonction de la comparaison de la concentration en méthane ou en dioxyde de carbone en sortie de l'installation I avec la deuxième valeur consigne E',
- Au moins un moyen D' de transmission de ce deuxième signal de commande à un moyen de régulation de ladite installation I.

4. Dispositif selon la revendication 3, **caractérisé en ce que** le moyen B et le moyen C sont combinés dans un premier processeur et/ou le moyen B' et le moyen C' sont combinés dans un second processeur.

5. Dispositif selon l'une des revendications 1 à 4, **caractérisé en ce que** le moyen de régulation comprend un système de vannes permettant d'ajouter ou d'enlever au moins une membrane dans l'installation I.

6. Dispositif selon l'une des revendications 1 à 5, **caractérisé en ce que** le moyen de régulation comprend au moins un ensemble compresseur-vanne de contre-pression permettant d'augmenter ou de diminuer la pression d'au moins un des flux mis en oeuvre dans l'installation I.

7. Procédé de régulation d'une installation I pour le traitement par perméation membranaire d'un flux gazeux d'alimentation comprenant au moins du méthane et du dioxyde de carbone ledit procédé mettant en oeuvre un dispositif tel que défini dans l'une des revendications 1 à 6, et comprenant :
a) Une étape de mesure du pouvoir calorifique supérieur (PCS) du flux gazeux d'alimentation,
b) Une étape de comparaison du pouvoir calorifique supérieur avec une valeur consigne E,
c) Une étape d'élaboration d'un signal de commande en fonction de la comparaison effectuée à l'étape b),
d) Une étape de transmission de ce signal de commande à un moyen de régulation de ladite l'installation I, et
e) Une étape de régulation de l'installation I en fonction du signal de commande transmis à l'étape d).

8. Procédé de régulation d'une installation I pour le traitement par perméation membranaire d'un flux gazeux d'alimentation comprenant au moins du méthane et du dioxyde de carbone ledit procédé mettant en oeuvre un dispositif tel que défini dans l'une des revendications 3 ou 4, et comprenant :
a) Une étape de mesure du pouvoir calorifique supérieur (PCS) du flux gazeux d'alimentation,
b) Une étape de comparaison du pouvoir calorifique supérieur avec une valeur consigne E,
c) Une étape d'élaboration d'un premier signal de commande de la concentration en méthane ou en dioxyde de carbone en sortie de l'installation I en fonction de la comparaison effectuée à l'étape b),
d) Une étape de transmission du premier signal de commande à une consigne de concentration en méthane ou en dioxyde de carbone en sortie de l'installation sous la forme d'une deuxième valeur consigne E',
e) Une étape de mesure de la concentration en méthane ou en dioxyde de carbone en sortie de l'installation I,
f) Une étape de comparaison de la concentration en méthane ou en dioxyde de carbone en sortie de l'installation I avec la deuxième valeur consigne E',
g) Une étape d'élaboration d'un deuxième signal de commande en fonction de la comparaison de la concentration en méthane ou en dioxyde de carbone en sortie de l'installation I avec la deuxième valeur consigne E',
h) Une étape de transmission de ce deuxième signal de commande à un moyen de régulation de ladite installation I et
i) Une étape de régulation de l'installation I en fonction du signal de commande transmis à l'étape h).

9. Procédé de régulation selon l'une des revendications 7 ou 8, **caractérisé en ce que** l'étape de régulation comprend une étape d'ajustement du nombre de membrane dans l'installation.

10. Procédé de régulation selon l'une des revendications 7 à 9, **caractérisé en ce que** l'étape de régulation comprend une étape d'augmentation ou de diminution de la pression d'au moins un des flux mis en oeuvre dans l'installation.

11. Procédé de régulation selon l'une des revendications 7 à 9, **caractérisé en ce que** le flux gazeux d'alimentation est du biogaz.

## Patentansprüche

1. Vorrichtung zum Einstellen einer Anlage I zur Aufbereitung durch Membranpermeation eines gasförmigen Zuführungsstroms, der mindestens Methan und Kohlendioxid umfasst, wobei die Vorrichtung umfasst:
- mindestens eine Einrichtung A zum Messen des Brennwerts (Hs) des gasförmigen Zuführungsstroms,
- mindestens eine Einrichtung B zum Vergleichen des Brennwerts mit einem Sollwert E,
- mindestens eine Einrichtung C zum Verarbeiten eines Steuersignals in Abhängigkeit vom Vergleich des Brennwerts mit dem Sollwert E und
- mindestens eine Einrichtung D zum Übertragen dieses Steuersignals,
wobei die Einrichtung D geeignet ist, das Steuersignal an eine Einrichtung zum Einstellen der Anlage I oder an eine Methan- oder Kohlendioxidsollkonzentration im Ausgang der Anlage in Form eines zweiten Sollwerts E' zu übertragen.

2. Vorrichtung nach Anspruch 1, **dadurch gekennzeichnet, dass** die Einrichtung B und die Einrichtung C in einem Prozessor kombiniert sind.

3. Vorrichtung nach einem der Ansprüche 1 oder 2, **dadurch gekennzeichnet, dass** die Einrichtung D zum Übertragen dieses Steuersignals geeignet ist, das Steuersignal an eine Methan- oder Kohlendioxidsollkonzentration im Ausgang der Anlage in Form eines zweiten Sollwerts E' zu übertragen, und die Vorrichtung umfasst:
- mindestens eine Einrichtung A' zum Messen der Methan- oder Kohlendioxidkonzentration im Ausgang der Anlage I,
- mindestens eine Einrichtung B' zum Vergleichen der Methan- oder Kohlendioxidkonzentration im Ausgang der Anlage I mit dem zweiten Sollwert E',
- mindestens eine Einrichtung C' zum Verarbeiten eines zweiten Steuersignals in Abhängigkeit vom Vergleich der Methan- oder Kohlendioxidkonzentration im Ausgang der Anlage I mit dem zweiten Sollwert E',
- mindestens eine Einrichtung D' zum Übertragen dieses zweiten Steuersignals an eine Einrichtung zum Einstellen der Anlage I.

4. Vorrichtung nach Anspruch 3, **dadurch gekennzeichnet, dass** die Einrichtung B und die Einrichtung C in einem ersten Prozessor kombiniert sind und/oder die Einrichtung B' und die Einrichtung C' in einem zweiten Prozessor kombiniert sind.

5. Vorrichtung nach einem der Ansprüche 1 bis 4, **dadurch gekennzeichnet, dass** die Einrichtung zum Einstellen ein System aus Ventilen umfasst, das es ermöglicht, mindestens eine Membran in der Anlage hinzuzufügen oder zu entfernen.

6. Vorrichtung nach einem der Ansprüche 1 bis 5, **dadurch gekennzeichnet, dass** die Einrichtung zum Einstellen mindestens eine Kompressor-Gegendruckventil-Anordnung umfasst, die es ermöglicht, den Druck mindestens eines der in der Anlage I eingesetzten Ströme zu erhöhen oder zu senken.

7. Verfahren zum Einstellen einer Anlage I zur Aufbereitung durch Membranpermeation eines gasförmigen Zuführungsstroms, der mindestens Methan und Kohlendioxid umfasst, wobei das Verfahren eine Vorrichtung wie in einem der Ansprüche 1 bis 6 definiert einsetzt und umfasst:
a) einen Schritt des Messens des Brennwerts (Hs) des gasförmigen Zuführungsstroms,
b) einen Schritt des Vergleichens des Brennwerts mit einem Sollwert E,
c) einen Schritt des Verarbeitens eines Steuersignals in Abhängigkeit von dem im Schritt b) durchgeführten Vergleich,
d) einen Schritt des Übertragens dieses Steuersignals an eine Einrichtung zum Einstellen der Anlage I und
e) einen Schritt des Einstellens der Anlage I in Abhängigkeit von dem im Schritt d) übertragenen Steuersignal.

8. Verfahren zum Einstellen einer Anlage I zur Aufbereitung durch Membranpermeation eines gasförmigen Zuführungsstroms, der mindestens Methan und Kohlendioxid umfasst, wobei das Verfahren eine Vorrichtung wie in einem der Ansprüche 3 oder 4 definiert einsetzt und umfasst:
a) einen Schritt des Messens des Brennwerts (Hs) des gasförmigen Zuführungsstroms,
b) einen Schritt des Vergleichens des Brennwerts mit einem Sollwert E,
c) einen Schritt des Verarbeitens eines ersten Steuersignals für die Methan- oder Kohlendioxidkonzentration im Ausgang der Anlage I in Abhängigkeit von dem im Schritt b) durchgeführten Vergleich,
d) einen Schritt des Übertragens des ersten Steuersignals an eine Methan- oder Kohlendioxidsollkonzentration im Ausgang der Anlage in Form eines zweiten Sollwerts E',
e) einen Schritt des Messens der Methan- oder Kohlendioxidkonzentration im Ausgang der Anlage I,
f) einen Schritt des Vergleichens der Methan- oder Kohlendioxidkonzentration im Ausgang der Anlage I mit dem zweiten Sollwert E',
g) einen Schritt des Verarbeitens eines zweiten Steuersignals in Abhängigkeit vom Vergleich der Methan- oder Kohlendioxidkonzentration im Ausgang der Anlage I mit dem zweiten Sollwert E',
h) einen Schritt des Übertragens dieses zweiten Steuersignals an eine Einrichtung zum Einstellen der Anlage I und
i) einen Schritt des Einstellens der Anlage I in Abhängigkeit von dem im Schritt h) übertragenen Steuersignal.

9. Verfahren zum Einstellen nach einem der Ansprüche 7 oder 8, **dadurch gekennzeichnet, dass** der Schritt des Einstellens einen Schritt des Anpassens der Membrananzahl in der Anlage umfasst.

10. Verfahren zum Einstellen nach einem der Ansprüche 7 bis 9, **dadurch gekennzeichnet, dass** der Schritt des Einstellens einen Schritt des Erhöhens oder Senkens des Drucks mindestens eines der in der Anlage eingesetzten Ströme umfasst.

11. Verfahren zum Einstellen nach einem der Ansprüche 7 bis 9, **dadurch gekennzeichnet, dass** der gasförmige Zuführungsstrom Biogas ist.

## Claims

1. Arrangement for regulation of a plant I for the membrane permeation treatment of a feed gas stream comprising at least methane and carbon dioxide, said arrangement comprising:
- at least one means A for measurement of the gross calorific value (GCV) of the feed gas stream,
- at least one means B for comparison of the gross calorific value with a setpoint value E,
- at least one means C for production of a control signal as a function of the comparison of the gross calorific value with the setpoint value E, and
- at least one means D for transmission of this control signal,
with the means D capable of transmitting the control signal to a means for regulation of said plant I or to a setpoint for concentration of methane or of carbon dioxide at the outlet of the plant in the form of a second setpoint value E'.

2. Arrangement according to Claim 1, **characterized in that** the means B and the means C are combined in a processor.

3. Arrangement according to either of Claims 1 and 2, **characterized in that** the means D for transmission of this control signal is capable of transmitting the control signal to a setpoint for concentration of methane or of carbon dioxide at the outlet of the plant in the form of a second setpoint value E' and said arrangement comprises:
- at least one means A' for measurement of the concentration of methane or of carbon dioxide at the outlet of the plant I,
- at least one means B' for comparison of the concentration of methane or of carbon dioxide at the outlet of the plant I with the second setpoint value E',
- at least one means C' for production of a second control signal as a function of the comparison of the concentration of methane or of carbon dioxide at the outlet of the plant I with the second setpoint value E',
- at least one means D' for transmission of this second control signal to a means for regulation of said plant I.

4. Arrangement according to Claim 3, **characterized in that** the means B and the means C are combined in a first processor and/or the means B' and the means C' are combined in a second processor.

5. Arrangement according to one of Claims 1 to 4, **characterized in that** the regulation means comprises a system of valves making it possible to add at least one membrane to or to remove at least one membrane from the plant I.

6. Arrangement according to one of Claims 1 to 5, **characterized in that** the regulation means comprises at least one compressor/backpressure valve assembly making it possible to increase or to reduce the pressure of at least one of the streams employed in the plant I.

7. Process for regulation of a plant I for the membrane permeation treatment of a feed gas stream comprising at least methane and carbon dioxide, said process employing an arrangement as defined in one of Claims 1 to 6, and comprising:
a) a step of measurement of the gross calorific value (GCV) of the feed gas stream,
b) a step of comparison of the gross calorific value with a setpoint value E,
c) a step of production of a control signal as a function of the comparison carried out in step b),
d) a step of transmission of this control signal to a means for regulation of said plant I, and
e) a step of regulation of the plant I as a function of the control signal transmitted in step d).

8. Process for regulation of a plant I for the membrane permeation treatment of a feed gas stream comprising at least methane and carbon dioxide, said process employing an arrangement as defined in either of Claims 3 and 4, and comprising:
a) a step of measurement of the gross calorific value (GCV) of the feed gas stream,
b) a step of comparison of the gross calorific value with a setpoint value E,
c) a step of production of a first control signal for the concentration of methane or of carbon dioxide at the outlet of the plant I as a function of the comparison carried out in step b),
d) a step of transmission of the first control signal to a setpoint for concentration of methane or of carbon dioxide at the outlet of the plant in the form of a second setpoint value E',
e) a step of measurement of the concentration of methane or of carbon dioxide at the outlet of the plant I,
f) a step of comparison of the concentration of methane or of carbon dioxide at the outlet of the plant I with the second setpoint value E',
g) a step of production of a second control signal as a function of the comparison of the concentration of methane or of carbon dioxide at the outlet of the plant I with the second setpoint value E',
h) a step of transmission of this second control signal to a means for regulation of said plant I, and
i) a step of regulation of the plant I as a function of the control signal transmitted in step h).

9. Regulation process according to either of Claims 7 and 8, **characterized in that** the regulation step comprises a step of adjustment of the number of membranes in the plant.

10. Regulation process according to one of Claims 7 to 9, **characterized in that** the regulation step comprises a step of increase or of decrease in the pressure of at least one of the streams employed in the plant.

11. Regulation process according to one of Claims 7 to 9, **characterized in that** the feed gas stream is biogas.
